(19) Europäisches Patentamt
European Patent Office
Office européen des brevets

(11) **EP 3 035 006 A2**

(12) **EUROPEAN PATENT APPLICATION**

(43) Date of publication:
**22.06.2016 Bulletin 2016/25**

(51) Int Cl.:
***G01F 1/66*** (2006.01)

(21) Application number: **15020187.9**

(22) Date of filing: **13.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **04.12.2014 GB 201421607**

(71) Applicant: **Gill Corporate Limited New Milton, Hampshire BH25 6QJ (GB)**

(72) Inventors:
• **Evans, George**
  **Lymington, Hampshire SO41 9LT (GB)**
• **Stickland, Anthony Charles Robert**
  **Lymington, Hampshire SO41 0PP (GB)**
• **Blacklock, Oliver Stewart**
  **Lymington, Hampshire SO41 9GT (GB)**
• **Gill, Michael John**
  **Beaulieu, Hampshire SO42 7XA (GB)**

(74) Representative: **Crouch, David John et al Bromhead Johnson Sovereign House 212-224 Shaftesbury Avenue London WC2H 8HQ (GB)**

(54) **APPARATUS AND A METHOD FOR PROVIDING A TIME MEASUREMENT**

(57) Apparatus for providing a measure of the time taken for sound to travel a predetermined distance. The apparatus comprises a transmitter electroacoustic transducer (2,46,108) for transmitting an acoustic signal, and a receiver electroacoustic transducer (3,48,108), spaced apart from the transmitter electroacoustic transducer (2,46,108), for receiving the acoustic signal transmitted by the transmitter electroacoustic transducer (2,46,108), when the apparatus is in use. The apparatus has a sound reflective surface (1,91,108) spaced apart from the receiver electroacoustic transducer (3,48,108) so that the latter also receives a reflection of the acoustic signal, and

timing electrical circuitry (54) connected to the receiver electroacoustic transducer (3,48,108) which circuitry (54) serves to provide a measure of the time delay between the respective receptions by the receiver electroacoustic transducer (3,48,108) of the acoustic signal and its reflection.

The invention extends to a flowmeter (10) which incorporates such apparatus and an anemometer which incorporates such apparatus. The apparatus can be adapted to measure the speed of sound.

The invention extends to the corresponding methods which make use of such apparatus.

Fig. 4

**EP 3 035 006 A2**

**Description**

The present invention relates to apparatus and a method for providing a measure of the time taken for sound, for example in the form of an ultrasonic sound pulse, to travel a predetermined distance through a medium, using a transducer to emit a sound and to detect the arrival of the sound at the end of its travel over that predetermined distance.

One of the problems encountered with providing such a measurement is the time delay between the instant at which electronic circuitry of the apparatus issues a command signal to cause the transducer to create a sound and the instant at which sound is actually generated within the medium by the transducer, and also between the instant at which the sound impinges upon a transducer sensitive surface and the instant at which the transducer causes that instant to be registered within electronic circuitry of the apparatus. These time delays may both be referred to as transducer delay. This may cause an inaccuracy in the time measurement. Although the apparatus could be calibrated to correct for these time delays, the characteristics of the transducer may vary with age, so that whereas a correction factor introduced at the start of the life of the apparatus may be sufficient to give the degree of accuracy required, as time passes the correction factor itself may become inaccurate, so that the apparatus does not give satisfactorily accurate readings. Transducer delay is also affected by temperature, and may vary with it. It is especially important to take this into consideration when endeavouring to measure the speed of sound, which is a function of temperature.

One way of overcoming these problems is proposed in the apparatus described in EP 0566708 B1. The manner in which this apparatus operates, and the manner in which the present invention is distinguished from it, may be readily understood from Figures 1 to 3 of the accompanying drawings, in which:

Figure 1 is an explanatory graph showing the operation of the apparatus described in EP 0566708 B1;
Figure 2 is a further explanatory graph showing the operation of apparatus embodying the present invention; and
Figure 3 is a further explanatory diagram showing a modified form of apparatus embodying the present invention.

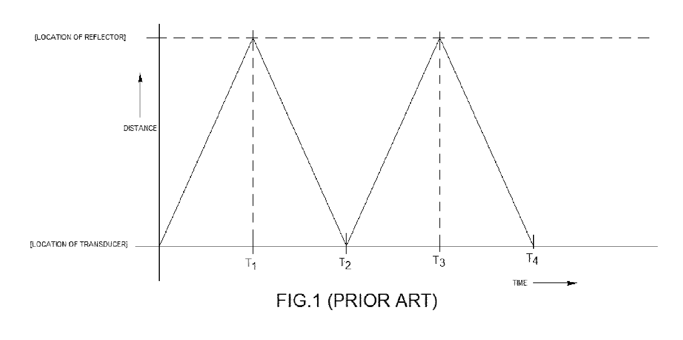

Thus, with reference to Figure 1, EP 0566708 B1 describes apparatus for measuring the speed of sound in a fluid in which an electroacoustic transducer at one end of a tube transmits an ultrasonic pulse into fluid present within the tube. This occurs at time zero, represented by the origin of the graph shown in Figure 1. The sound travels along the tube until it reaches the opposite end of that tube where it is reflected by an internal surface across that end. At that instant, marked as $T_1$ in Figure 1, the sound is reflected back towards the transducer. It reaches the latter at time $T_2$ whereupon it is reflected by the transducer itself back towards the reflector at the opposite end of the tube, which it reaches the second time at time $T_3$. The sound is reflected once again by the reflector to arrive back at the transducer at time $T_4$. The time taken therefore for the sound to travel twice the length of the tube, which is a known distance, is the difference between time $T_4$ and time $T_2$. Furthermore, the time delay between when the sensitive surface of the transducer is struck by the sound and the time when that strike is registered within the electronic circuitry of the apparatus, to provide a value of that instant, is the same for both $T_4$ and $T_2$. Thus the error introduced by transducer delay occurs at the beginning of the time measurement, so as to delay its commencement, and also at the end of that measurement, so as to delay its cessation by the same amount of time as the delay in its commencement, so that the two errors cancel one another out when $T_2$ is subtracted from $T_4$ to provide an accurate measurement of the time taken for the sound to travel up and down the length of the tube, and since that length is known, the speed of sound in the fluid may be determined accurately.

However, even this degree of accuracy is limited by the fact that the sound has already travelled twice the length of the tube before the measurement commences. Thus with the sound being in the form of a pulse, the pulse may suffer dispersion if the fluid through which it is travelling is a dispersive medium, and in any case the sharpness of the pulse may deteriorate by virtue of scattering of sound from the sides of the tube walls, and the intensity of the pulse may have been attenuated to a level below background noise.

The present invention seeks to provide a remedy.

Accordingly the present invention is directed to apparatus for providing a measure of the time taken for sound to travel a predetermined distance, comprising a transmitter electroacoustic transducer for transmitting an acoustic signal, and a receiver electroacoustic transducer, spaced apart from the transmitter electroacoustic transducer, for receiving the acoustic signal transmitted by the transmitter electroacoustic transducer, the apparatus having a sound reflective surface spaced apart from the receiver electroacoustic transducer so that the latter also receives a reflection of that signal, and timing electrical circuitry connected to the receiver electroacoustic transducer which circuitry serves to provide a measure of the time delay between the respective receptions by the receiver electroacoustic transducer of that signal and its reflection.

By having two transducers, one to transmit a sound signal and the other to receive it, it is not necessary to await a reflection of the sound before measurement can start. This means that the total distance travelled by the sound before measurement commences is less, so that likewise the deterioration in the sharpness of the signal is also less.

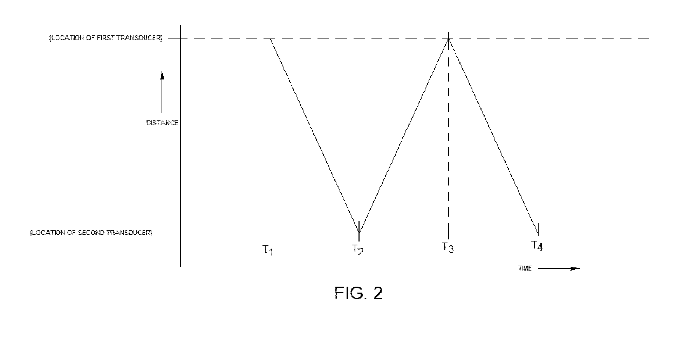

The reflective surface provided in the present invention may be provided by the transmitter electroacoustic transducer itself, or by a part fixed thereto. This provides an economy of components. If the two transducers are mutually opposed, the sound can be reflected back and forth from one to the other. The result is shown in Figure 2 in which at a time $T_1$ the first transducer, namely the transmitter electroacoustic transducer, emits a signal, for example a pulse, of ultrasound. This travels towards the second transducer, namely the receiver electroacoustic transducer, to receive the pulse at time $T_2$. The signal is reflected back towards the first transducer at this instant, which it reaches at time $T_3$, to be reflected at that instant back to the second transducer which receives the signal at time $T_4$. The time taken for the sound signal and/or reflections thereof to travel twice the spacing between the first and second transducers is thus given by the difference between time $T_4$ and time $T_2$, and once again this does not suffer any error owing to the time taken between the instant the sound signal impinges upon the sensitive surface of the transducer to the time this is registered in electronic circuitry of apparatus. However, because the sound signal has only travelled a distance equal to the spacing between the first and second transducers, rather than twice that distance, before the instant $T_2$, the integrity of the signal has deteriorated less than in the case of the operation shown in Figure 1, and by the time $T_4$, the sound signal has travelled three of those distances, rather than four, so at this stage also the signal has deteriorated less than in the case of the operation in Figure 1.

The electrical circuitry may be such as to cause the operation of the transmitter electroacoustic transducer and the receiver electroacoustic transducer to be reversed.

This enables an average to be made of measurements taken before and after role reversal, which may increase the accuracy of the overall measurement, reducing errors which might be introduced for example by movement of the fluid between the transducers.

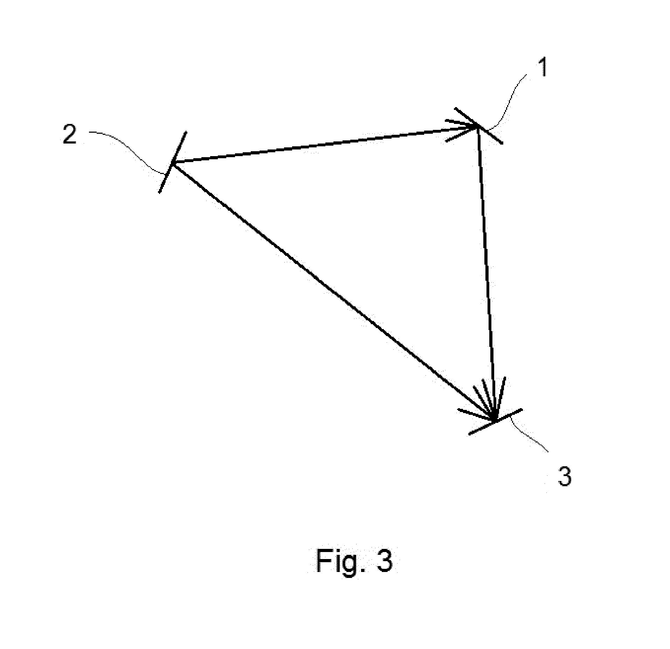

In one embodiment of the present invention, shown in Figure 3, the reflective surface 1 could be located spaced apart from both the transmitter electroacoustic transducer 2 and the receiver electroacoustic transducer 3, with the distances between the reflective surface and both the transmitter electroacoustic transducer and the receiver electroacoustic transducer known, as well as the distance between the two transducers, so that the time between the receipt by the receiver electroacoustic transducer of the signal from the transmitter electroacoustic transducer and that from the reflective surface is a measure of the time it takes sound to travel over a distance equal to the distance from one transducer to the other via the reflective surface, less the direct distance between the transducers.

The present invention may be incorporated in a flowmeter.

Thus the transducers may be located respectively at opposite ends of a duct along which flows fluid the flow of which is to be measured, and the electronic circuitry may be such as to cause one of the transducers to emit an acoustic signal and to measure the time it takes for that signal to reach the other transducer, and to cause the said other transducer to emit an acoustic signal and to measure the time it takes for that signal to reach the said one transducer, and to calculate the rate of flow of fluid through the duct from the difference between these two measurements.

The present invention may also be incorporated in an anemometer.

Thus the transducers may be mounted on a support in such a manner that they are opposed to one another. The path between them may be generally horizontal, so that ambient air can pass between them. There may be two such pairs with the path between the transducers of one pair oriented orthogonally to the path between those of the other.

This enables the wind direction to be ascertained as well as the wind speed.

The present invention extends to apparatus for measuring the speed of sound, in which the timing electrical circuitry includes a memory for retaining a value of the distance travelled by the sound during the said time delay, and a processor to enable that value to be divided by the said time delay to provide a measure of the speed of sound.

A second aspect of the present invention is directed to a method of providing a measure of the time taken for sound to travel a predetermined distance, comprising emitting an acoustic signal from a transmitter electroacoustic transducer and receiving a signal by a receiver electroacoustic transducer which is spaced apart from the transmitter electroacoustic transducer, reflecting the signal from a sound reflective surface spaced apart from the receiver electroacoustic transducer and receiving the reflection by the receiver electroacoustic transducer, and measuring the time delay between the reception by the receiver electroacoustic transducer of the signal and its reflection by means of circuitry connected to the receiver electroacoustic transducer.

The reflective surface may be provided by the transmitter electroacoustic transducer itself, or by a part fixed thereto. This provides an economy of components, but most importantly it increases the extent to which transducer delay is eliminated. If the two transducers are mutually opposed, the sound can be reflected back and forth from one to the other, as already described with reference to Figure 2.

The operation of the transmitter electroacoustic transducer and the receiver electroacoustic transducer may be reversed. An average can then be made of the measurements taken respectively before and after role reversal. This may increase the accuracy of the overall measurement, reducing errors which might be introduced for example by movement of the fluid between the transducers.

The reflective surface could be located spaced apart from both the transmitter electroacoustic transducer and the receiver electroacoustic transducer, as already described with reference to Figure 3.

The second aspect of the present invention may be employed in a flowmeter. For example, the transducers may be located respectively at opposite ends of a duct through which flows fluid the flow of which is to be measured, and one of the transducers may be caused to emit an acoustic signal, whereupon the time it takes for that signal to reach the other transducer may be measured, and the said other transducer may be caused to emit an acoustic signal and the time it takes for that signal to reach the said one transducer may be measured, and whereupon the rate of flow of fluid through the duct may be calculated from the differences between these two measurements.

Alternatively the speed of wind can be measured using such a pair of transducers mounted on a support so as to be opposed to one another. The path between them may be generally horizontal. There may be two pairs of transducers. The path between the transducers of one pair may be orthogonal to that between those of the other pair to enable the direction of the wind to be ascertained as well as its speed.

The present invention also extends to a method of providing a measure of the speed of sound by the method according to the second aspect of the present invention set out hereinbefore, and dividing the distance travelled by the sound during the said time delay by that time delay to obtain a measure of the speed of sound.

Examples of devices in which an example of apparatus embodying the present invention is incorporated will now be described in greater detail, in which:

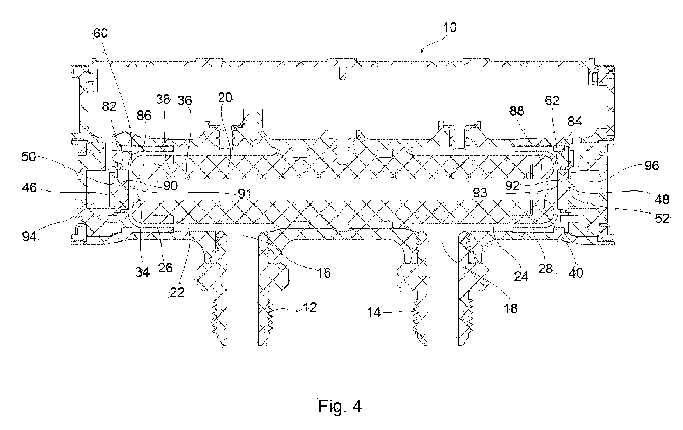

Figure 4 shows an axial sectional view of a flowmeter incorporating apparatus made in accordance with the present invention;

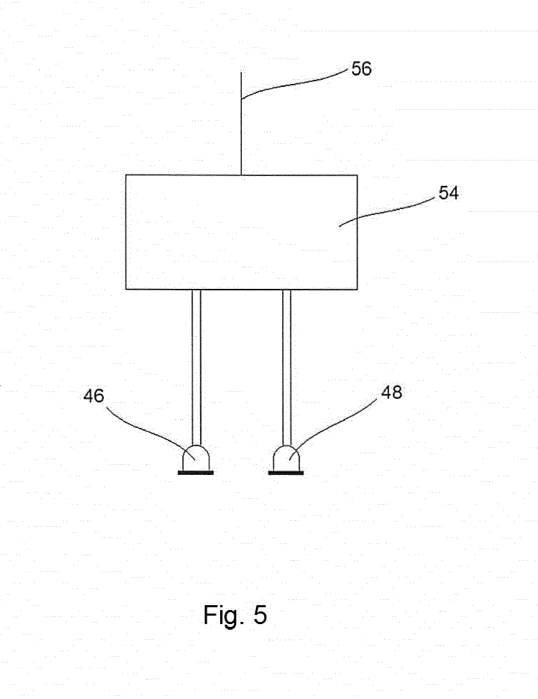

Figure 5 shows a block circuit diagram of electronic circuitry of the flowmeter shown in Figure 4;

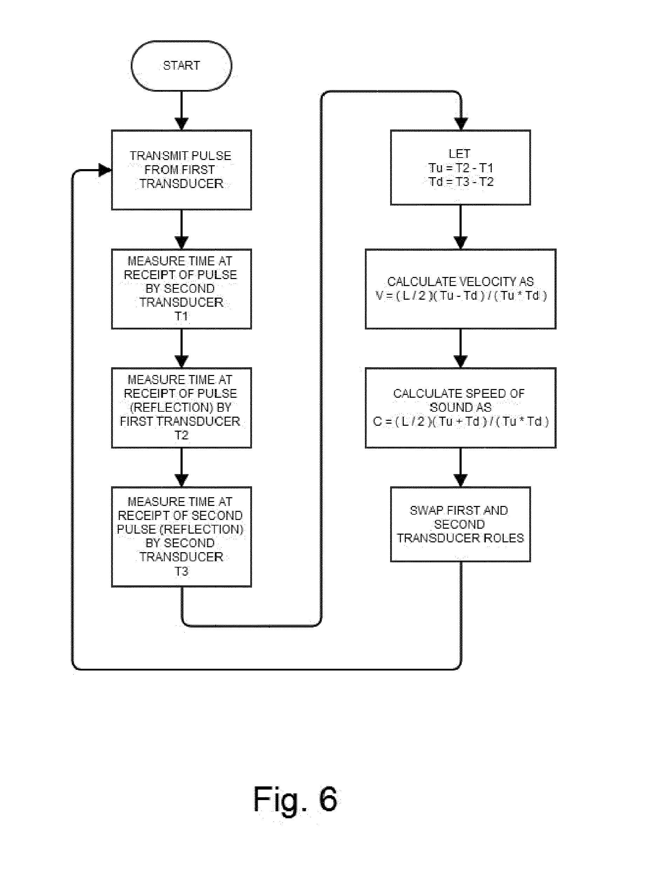

Figure 6 is a flow chart of a computer programme by which the circuitry shown in Figure 5 is set to operate;

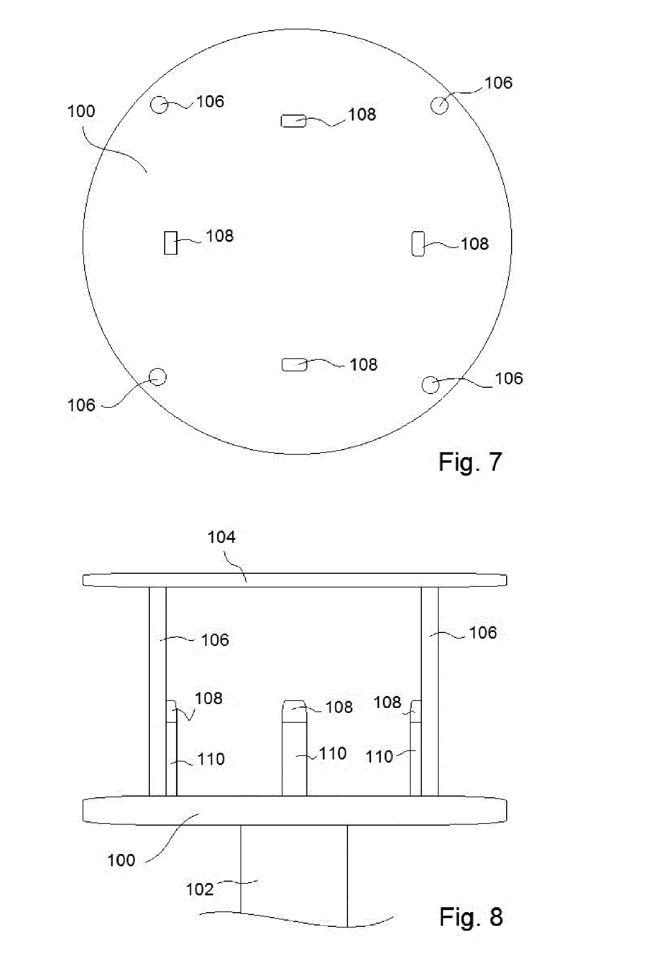

Figure 7 is a plan view of an anemometer incorporating apparatus made in accordance with the present invention, with a part thereof removed to show other parts more clearly;

Figure 8 shows a side view of the anemometer shown in Figure 7;

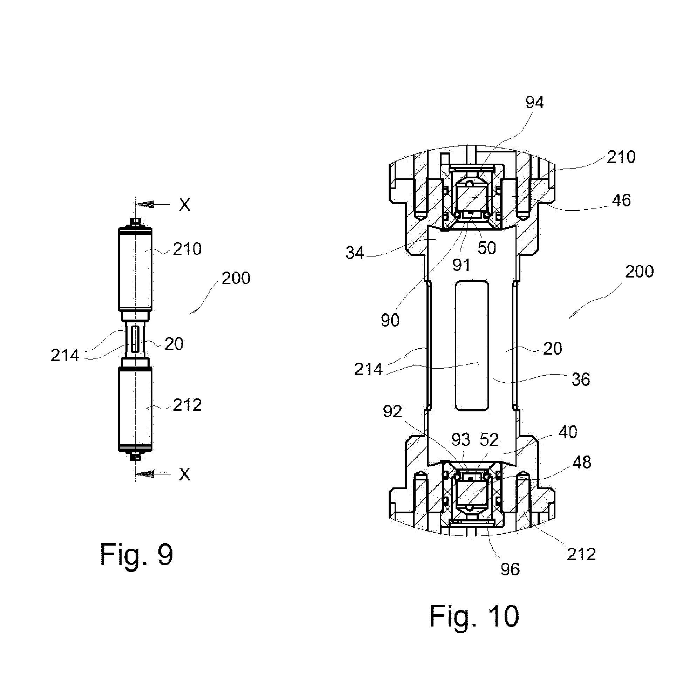

Figure 9 shows a side view of a device which embodies the present invention, for measuring the speed of sound in a fluid within the device;

Figure 10 shows, on a larger scale, an axial sectional view of a central part of the device shown in Figure 9, taken in the plane indicated by the line X-X in Figure 9.

The flowmeter 10 shown in Figure 4 comprises a generally cylindrical inlet port 12 and a generally cylindrical output port 14. These provide respectively an inlet aperture 16 and an outlet aperture 18, both of which are generally circular and are of the same diameter as one another.

The respective central axes of the inlet and outlet ports extend perpendicularly to a generally cylindrical part 20 of the flowmeter 10, and the ports 12 and 14 open out into respective upstream and downstream annular passageways 22 and 24 which are within the part 20 and are co-axial therewith. These passageways extend into further respective passageways 26 and 28 via respective constrictions to reduce downstream turbulence within the fluid which flows through the flowmeter 10 when the latter is in use.

A duct 36 which is defined by a generally cylindrical block of glass filled PTFE 38 and which is circular in cross section extends from one end of the cylindrical part 20 to the other, and has flared ends.

The outer ends of the passageways 26 and 28 are in communication with the ends 34 and 40 of the duct 36 respectively by way of respective radially extending curved passageways 60 and 62.

The cross-sectional diameter of the duct 36, which is uniform in cross section throughout its length between its flared ends, is significantly less than the diameter of the inlet and outlet apertures 16 and 18.

A first piezoelectric ceramic ultrasonic transducer 46 is located within a void 94 at one end of the part 20 (the end nearer to the inlet port 12), and a second piezoelectric ultrasonic ceramic transducer 48 is located within the void 96 at the opposite end of the part 20.

The transducer 46 has a generally planar circular sound-reflective vibratory surface 50 capable of generating and receiving ultrasonic vibrations. The diameter of the surface 50 is significantly greater than the cross-sectional diameter of the duct 36. The surface 50 faces the duct 36 and is orthogonal to that duct, and has a perpendicular central axis which is co-linear with the central longitudinal axis of the duct 36.

Correspondingly, the transducer 48 has a generally planar circular sound-reflective vibratory surface 52 capable of generating and receiving ultrasonic vibrations. The diameter of the surface 52 is the same as that of the surface 50 and also faces the duct 36 and is also orthogonal to the that duct, having a perpendicular central axis which is co-linear with the central longitudinal axis of the duct 36.

The curved passageways 60 and 62 are defined on their outsides by inner curved surfaces of annular parts 82 and 84 respectively, and on their insides by outer curved surfaces of annular parts 86 and 88 respectively. The first piezoelectric ultrasonic transducer 46 has its vibratory surface 50 attached to the rear surface of a thickness-optimised cap 90, whereby ultrasonic vibrations generated in the transducer 46 are transmitted into the fluid in the end 34 of the duct 36, via a vibration surface 91 of the cap 90 facing the duct 36 and provided for the transducer 46. The vibration surface 50 is of greater diameter than that of the cross-section of the duct 36. The vibration surface 91 is also of greater diameter than that of the cross-section of the duct 36. The inner annular part 86 which has a side cross-section which is curved, guides the ultrasound vibrations into the duct 36, through the fluid within which they propagate.

At the opposite end 40 of the duct 36, the transducer 48 has its vibratory surface 52 attached to the rear surface of a thickness-optimised cap 92 through which ultrasonic vibrations present in fluid in the end 40 of the duct 36 are coupled to the transducer 48, via a vibration surface 93 of the cap 92 facing the duct 36 and provided for the transducer 48, to cause the latter to generate electrical signals accordingly. The vibration surface 52 is of greater diameter than that of the cross-section of the duct 36. The vibration surface 93 is also of greater diameter than that of the cross-section of the duct 36.

Because of the symmetry of the flowmeter 10 about a transverse central plane thereof, an ultrasonic pulse generated by the transducer 48 can also transmitted through fluid in the duct 36 to be received by and to cause electrical signals to be generated within, the transducer 46.

The caps 90 and 92 are in sealing contact around their respective peripheries with the inside edges of the annular parts 82 and 84 respectively, so that the transducers 46 and 48 are both isolated from the fluid which flows through the flowmeter 10 when it is in use. Voids 94 and 96 respectively behind the transducers 46 and 48 are air-filled, and the caps 90 and 92 are therefore thick enough to withstand the pressure differential between the fluid and the air when the flowmeter is in use.

At the same time, the thickness of the caps 90 and 92 is such as to optimise the coupling of vibration between the transducers 46 and 48 and the fluid in the duct 36 when the flowmeter 10 is in use.

The thickness of the caps 90 and 92 is reduced where they meet the annular parts 82 and 84 respectively, and the latter parts are so made that they are effective as damping mountings, to reduce signal degradation owing to ringing of the caps 90 and 92.

The restricted passageways 26 and 28 and the curved passageways 60 and 62 each comprise a series of channels arranged symmetrically around the circumference of the transducers 46 and 48 respectively. Each of these channels open out into the space 34 or 40 in front of the cap 90 or 92 as the case may be, and the flow through each channel is the same to ensure a symmetrical flow entering and leaving the duct 36.

The block circuit diagram shown in Figure 5 shows how each transducer 46 and 48 is connected to receive signals from and send signals to timing electrical circuitry 54 which has a central processor unit to provide a signal at an output 56 thereof indicative of the flow rate of fluid which passes through the flowmeter 10 when the latter is in use.

When the flowmeter 10 shown in Figure 4 is in use, fluid the flow of which is to be measured by the flowmeter 10, for example engine fuel such as aviation fuel, petrol or diesel fuel, flows through the inlet port 12, along the annular passageway 22 and the annular passageway 26, and into the end 34 of the duct 36.

The fluid continues from the end 34 of the duct 36, right the way along that duct 36 to the other end thereof where it exits the duct 36 at its other end 40. From here it flows through the curved passageways 62 into the annular passageways 28 and 24 to the outlet port 14 through which it exits the flowmeter 10.

The voids 94 and 96 behind the transducers 46 and 48 respectively are air-filled, or filled with some other gas or other low density material, and those transducers are thereby isolated from the fluid flowing through the flowmeter 10 when it is use.

The foregoing construction of flowmeter has a low sensitivity to turbulence variation with flow rate changes. It provides a fast response time, is compact in form and is resistant to outside interference.

Because the flowmeter 10 is reflection symmetrical about a central transverse plane thereof, the function of the inlet 12 and the outlet 14 can be readily swapped, so that the function of what is referred to herein as the inlet 12 is changed so that it becomes the outlet, and the function of what is referred to herein as the outlet 14 is changed so that it becomes the inlet.

The electrical or electronic circuitry 54 with the central processor unit is programmed to operate in the manner shown in Figure 6 whilst fluid flows thus through the flowmeter 10.

Thus once steady state flow conditions are present in the flowmeter 10, the programme set out in Figure 6 is commenced. As a first step, after the operation of the programme is commenced, an ultrasonic pulse is transmitted at time $T_0$ from the transducer 46, via the cap 90, into the duct 36. Let the time taken for the signal to propagate through the electronics and through the first transducer be denoted by t1. Let the speed of flow of fluid along the duct 36 from its end 34 to its end 40 be denoted by V. Receipt of the pulse as given by the second transducer 48 enables the next step in Figure 6 to be carried out, namely a measurement of the time of that receipt as time $T_1$. In this regard, let the time taken for the signal to propagate through the electronics and through the second transducer be denoted by t2. The time that can be measured by the processor of the circuitry 54 between transmission by the processor through the first transducer 46 to reception by the processor through the second transducer 48 is then given by the equation:

$$(1) \quad T_1 - T_0 = t1 + T_d + t2,$$

where $T_d$ is the time spent by the pulse in the fluid within the duct 36, and (from speed = distance / time) can

be written as:

$$(2) \quad T_d = L / (C + V)$$

where L is the distance between the transducers and C is the speed of sound through the fluid.

When the sound signal reaches the second transducer 48, or more strictly the face 93 of the cap 92 of the second transducer 48, the acoustical signal splits into two parts: one part continues to propagate through the transducer and into the electronics, allowing $T_1$ to be measured. However, part of the signal is also reflected off the face of the transducer 48. This signal travels from the face of the second transducer 48 back to the first transducer 46. Once it reaches the face of the first transducer 46 again it splits into two parts. One part continues through the first transducer 46 and its electronics to the processor of the circuitry 54, enabling the next step of the flowchart shown in Figure 6 to be executed, namely the measurement of the time indicated at which the transducer 46 receives the reflected pulse, denoted by $T_2$. This time can be given by the following equation:

$$(3) \quad T_2 - T_0 = t1 + T_d + T_u + t1$$

where the time taken for the pulse to travel through the fluid from the second transducer 48 back towards the first is:

$$(4) \quad T_u = L / (C - V)$$

This duration is similar to $T_d$, but because the pulse is now travelling in the opposite direction with respect to the fluid flow, the sign in front of V has changed.

Subtraction of equation (1) from equation (3), gives:

$$(5) \quad T_2 - T_1 = T_u + t1 - t2$$

It is noted that the delay through each transducer should be almost identical, so that the term t1 - t2 is very small indeed. This difference in delays is denoted as te, so that:

$$(6) \quad T_2 - T_1 = T_u + te$$

This is a powerful result because it provides the time taken that the pulse took to travel through the fluid from the face of the second transducer 48 to the face of the first transducer 46, with only the difference in transducer delays present as an error factor.

Part of the pulse that reflects off the face of the first transducer 46, travels through the fluid to the second transducer 48, the signal of which then travels through the second transducer 48 and its electronics to give:

$$(7) \quad T_3 - T_0 = t1 + T_d + T_u + T_d + t2$$

$T_3$ is given at the next step in the flowchart in Figure 6, namely the measurement of the time of receipt of the reflected pulse by the second transducer 48. Subtraction of the equation (3) from equation (7) gives:

$$(8) \quad T_3 - T_2 = T_d + t2 - t1$$

or

$$(9) \quad T_3 - T_2 = T_d - te$$

Again, this is a powerful result because it provides the time taken for the pulse to travel through the fluid only, from the face of the first transducer 46, to the face of the second transducer 48, with only the difference in transducer delays present as an error factor. Substituting equations (2) and (4) into (9) and (6) respectively gives:

$$(10) \quad T_3 - T_2 = ( L / (C + V) ) - te$$

and

$$(11) \quad T_2 - T_1 = ( L / (C - V) ) + te$$

which can be rearranged to give

$$(12) \quad C + V = L / (T_3 - T_2 + te )$$

and

$$(13) \quad C - V = L / (T_2 - T_1 - te )$$

Summing equations (12) and (13) gives

$$(14) \quad C = ( L (T_3 - T_1 ) ) / ( 2 (T_3 - T_2 + te ) (T_2 - T_1 - te ) )$$

Though te is unknown, it can be assumed to be substantially zero. Equation (14) then gives a very accurate measure of the speed of sound in the fluid as:

$$(15) \quad C = (L/2)( T_u + T_d)/( T_u * T_d)$$

Equation (13) can be subtracted from equation (12) resulting in an equation for the speed of flow of the fluid:

$$(16) \quad V = ( L ( 2 T_2 - T_1 - T_3 - 2te ) ) / ( 2 (T_3 - T_2 + te ) (T_2 - T_1 - te ) )$$

Again, te is deemed to be zero, to give:

$$(17) \quad V = (L/2)( T_u - T_d)/( T_u * T_d)$$

Therefore the processor of the circuitry 54 in the next three steps in the flowchart in Figure 6 calculates the values of $T_u$ and $T_d$, then V from equation 17 and C from equation 15.

Finally, the processor of the circuitry 54 carries out the last step given in Figure 6, namely swapping the roles of the transducers 46 and 48 and repeating the cycle of steps in Figure 6 and averaging the values obtained for V and C.

From the value of V, the processor of the circuitry 54 may calculate the flowrate F using the equation:

$$(18) \quad F = V*\Pi*r^2$$

where r is the radius of the cross-section of the duct 36.

Numerous variations and modifications to the illustrated flowmeter 10 may occur to the reader without taking the resulting construction outside the scope of the present invention. To give one example only, it would be possible to have the inlet port 12 and outlet port 14 at respective ends of the part 20 so that their respective axes are in alignment with that of the duct 36, provided sufficient means are provided to reduce turbulence within the fluid.

The anemometer shown in Figures 7 and 8 comprises a generally disc-shaped support 100 mounted horizontally on a pedestal 102. The latter is of circularly-sectioned cylindrical form, and the edges of the support 100 are rounded to reduce turbulence. A disc-shaped cover 104 of the same diameter as the support 100 is held above the latter by four pillars 106 equiangularly spaced around the periphery of the support 100. Four electroacoustic transducers 108 are supported on the top of respective pillars 110 (only three of which are visible in Figure 8) which extend upwardly from the support 100. Each transducer is directed towards the diametrically opposite transducer, so that they together constitute two pairs, with the path between those of one pair being generally orthogonal to the path between those of the other. Each pair is connected to timing electrical circuitry 54 as shown in Figure 5, the latter being programmed to operate the programme illustrated in Figure 6 for each pair. For wind speeds which are small compared to the speed of sound in air, this gives a measurement of the wind speed and direction by deeming the value of the windspeed thus measured along the path between one pair of transducers to be $V_x$, and the windspeed along the path between the other pair of transducers to be $V_y$, so that the windspeed is given by:

$$(19) \quad V = \sqrt{(V_x^2 + V_y^2)}$$

and the wind direction is given by the angle $\theta$, being the angle between the wind direction and the appropriate one of the said paths, given by:

$$(20) \quad \theta = \tan^{-1}(V_x/V_y)$$

Numerous variations and modifications to the anemometer may occur to the reader without taking the resulting construction outside the scope of the present invention. For example, a further pair of transducers may be provided with the path between them oriented generally vertically, to measure updraft or downdraft as well as wind speed and direction.

The present invention has any application in which the speed and/or direction of flow of a fluid is to be measured, or in which the speed of sound is to be measured, although the invention is not limited to such applications. Measurement of the speed of sound can be achieved for example by adapting the computer programme shown in Figure 6 to calculate the value of the speed of sound using the equation:

$$(21) \quad V_s = L/T$$

in which there is no flow of fluid in the direction from one transducer to the other, so that $T-T_u=T_v$

For the reasons already discussed, application of the present invention to such apparatus allows the axial fluid velocity to be measured, and therefore the error usually associated with a speed-of-sound measurement in axial flow situations can be reduced. From a knowledge of the dependence of the speed of sound in a given medium upon the temperature of that medium, a measurement of the speed of sound in a medium, for example the ambient air, can be used to provide a measure of the temperature of that medium, by way of timing electrical circuitry which has a processor programmed accordingly and provided with a memory in which is held a mapping between the speed of sound in the medium concerned and the temperature of the medium.

Parts of the device 200 shown in Figures 9 and 10 which correspond to parts of the flowmeter shown in Figure 4 have been labelled with the same reference numerals. Thus the device 200 shown in Figures 9 and 10 comprises a generally cylindrical hollow part 20 defining a duct or measurement channel 36 within it. Inlet and outlet apertures 214 in the part 20 enable fluid (not shown) around the device 12 when it is in use to pass into and out of the channel 36.

Thus the channel 36 which is defined by the interior of the part 20 is circular in cross section and extends from one end of the cylindrical part 20 to the other.

The cross-sectional diameter of the channel 36 is uniform in cross section throughout its length.

A first piezoelectric ceramic ultrasonic transducer 46 of a transducer assembly 210 is located within a void 94 at one end of the part 20, and a second piezoelectric ultrasonic ceramic transducer 48 of a transducer assembly 212 is located within the void 96 at the opposite end of the part 20.

The transducer 46 has a generally planar circular vibratory surface 50 capable of generating and receiving ultrasonic vibrations. The surface 50 faces the channel 36 and is orthogonal to that channel, and has a perpendicular central axis which is co-linear with the central longitudinal axis of the channel 36.

Correspondingly, the transducer 48 has a generally planar circular vibratory surface 52 capable of generating and receiving ultrasonic vibrations. The diameter of the surface 52 is the same as that of the surface 50 and also faces the channel 36 and is also orthogonal to the that channel, having a perpendicular central axis which is co-linear with the central longitudinal axis of the channel 36.

The first piezoelectric ultrasonic transducer 46 has its vibratory surface 50 attached to the rear surface of a thickness-optimised cap 90, whereby ultrasonic vibrations generated in the transducer 46 are transmitted into the fluid in the end 34 of the channel 36, via a sound-reflective vibratory surface 91 of the cap 90 facing the channel 36 and provided for the transducer 46. The ultrasound vibrations of the surface 91 are thereby propagated through the channel 36.

At the opposite end 40 of the channel 36, the transducer 48 has its vibratory surface 52 attached to the rear surface of a thickness-optimised cap 92 through which ultrasonic vibrations present in fluid in the end 40 of the channel 36 are coupled to the transducer 48, via a sound-reflective vibratory surface 93 of the cap 92 facing the channel 36 and provided for the transducer 48, to cause the latter to generate electrical signals accordingly.

Because of the symmetry of the device 200 about a transverse central plane thereof, an ultrasonic pulse generated by the transducer 48 can also transmitted through fluid in the channel 36 to be received by and to cause electrical signals to be generated within, the transducer 46.

The caps 90 and 92 are in sealing contact around their respective peripheries with the inside edges of respective annular parts of the transducer assemblies 210 and 212, so that the transducers 46 and 48 are both isolated from the fluid in the channel 36 when the device 200 is in use. Voids 94 and 96 respectively behind the transducers 46 and 48 are air-filled, and the caps 90 and 92 are therefore thick enough to withstand the pressure differential between the fluid and the air when the device 200 is in use.

At the same time, the thickness of the caps 90 and 92 is such as to optimise the coupling of vibration between the transducers 46 and 48 and the fluid in the channel 36 when the device 200 is in use.

The thickness of the caps 90 and 92 is reduced where they meet the annular parts of the assemblies 210 and 212 respectively, and the latter parts are so made that they are effective as damping mountings, to reduce signal degradation owing to ringing of the caps 90 and 92.

The block circuit diagram shown in Figure 5 also shows how each transducer 46 and 48 is connected to receive signals from and send signals to a central processor unit of the circuitry 54. In the case of the device 200, however, the central processor unit of the circuitry 54 is programmed differently from the manner in which it is programmed for the flowmeter 10 of Figure 4. For the device 200 it is programmed to provide a signal at an output 56 thereof indicative of the speed of sound in fluid in the channel 36 when the device 200 is in use.

When the device 200 shown in Figures 9 and 10 is in use, fluid the speed of sound within which is to be measured by the device 200, for example engine fuel such as aviation fuel, petrol or diesel fuel, is present within the channel 36.

The voids 94 and 96 behind the transducers 46 and 48 respectively are air-filled, or filled with some other gas or other low density material, and those transducers are thereby isolated from the fluid in the channel 36 of the device 200 when it is use.

The foregoing construction of device 200 has a low sensitivity to turbulence variation in the fluid which surrounds it when it is in use. Although exchange of fluid will occur between that which is within the channel 36 and that which is outside it, via the apertures 214, there is no overall movement of fluid in the axial direction along the channel 36 in this embodiment. It provides a fast response time, is compact in form and is resistant to outside interference.

Because the device 200 is reflection symmetrical about a central transverse plane thereof, the roles of the transducers 46 and 48 can be readily reversed.

For the device 200, the central processor unit of the circuitry 54 is programmed to operate in the manner shown in Figure 6 whilst fluid is present within the channel 36, there being a memory present in the circuitry 54 for retaining a value of the distance travelled (L) by the sound during the time delay (T), and the processor of the circuitry 54 enables that value (L) to be divided by the said time delay (T) to provide a measure of the speed of sound.

Thus once steady state flow conditions are present in the device 200, the programme set out in Figure 6 is commenced. This gives the speed of sound in the fluid within the channel 36 using equation (21) above.

As with the other illustrated embodiments, many modifications and variations to the construction of the device 200 may occur to the reader without the resulting construction being outside the scope of the present invention.

**Claims**

1. Apparatus for providing a measure of the time taken for sound to travel a predetermined distance, comprising a transmitter electroacoustic transducer (2,46,108) for transmitting an acoustic signal, and a receiver electroacoustic transducer (3,48,108), spaced apart from the transmitter electroacoustic transducer (2,46,108), for receiving the acoustic signal transmitted by the transmitter electroacoustic transducer (2,46,108), when the apparatus is in use, **characterised in that** the apparatus has a sound reflective surface (1,91) spaced apart from the receiver electroacoustic transducer (3,48,108) so that the latter also receives a reflection of that signal, and timing electrical circuitry (54) connected to the receiver electroacoustic transducer (3,48,108) which circuitry (54) serves to provide a measure of the time delay between the respective receptions by the receiver electroacoustic transducer (3,48,108) of that signal and its reflection.

2. Apparatus according to claim 1, **characterised in that** the transmitter electroacoustic transducer (108) and the receiver electroacoustic transducer (108) are opposed, and the sound reflective surface (108) is provided by the transmitter electroacoustic transducer (108) itself.

3. Apparatus according to claim 1, **characterised in that** the sound reflective surface (91) is provided by a part (90) fixed to the transmitter electroacoustic transducer (46).

4. Apparatus according to claim 1, **characterised in that** the sound reflective surface (1) is located spaced apart from both the transmitter electroacoustic transducer (2) and the receiver electroacoustic transducer (3).

5. Apparatus according to any preceding claim, **characterised in that** the electrical circuitry (54) is such as to enable the operation of the transmitter electroacoustic transducer (2,46,108) and the receiver electroacoustic transducer (3,48,108) to be reversed.

6. A flowmeter (10) incorporating apparatus as claimed in any preceding claim.

7. A flowmeter (10) according to claim 6, **characterised in that** the transducers (46,48) are located respectively at opposite ends of a duct (36) along which flows fluid the flow of which is to be measured, and the electronic circuitry (54) is such as to cause one of the transducers (46) to emit an acoustic signal and to measure the time it takes for that signal to reach the other transducer (48), when the apparatus is in use, and to cause the said other transducer (48) to emit an acoustic signal and to measure the time it takes for that signal to reach the said one transducer (46), and to calculate the rate of flow of fluid through the duct (36) from the difference between these two measurements.

8. An anemometer incorporating apparatus according to any one of claims 1 to 5.

9. An anemometer according to claim 8, read as appended to claim 2, **characterised in that** the path between the transmitter electroacoustic transducer (108) and the receiver electroacoustic transducer (108) is generally horizontal, so that ambient air can pass between them.

10. An anemometer according to claim 8 or claim 9, **characterised in that** there are two such pairs of transducers (108) with the path between the transducers of one pair oriented orthogonally to the path between those of the other.

11. Apparatus according to any one of claims 1 to 5, **characterised in that** the timing electrical circuitry (54) includes a memory for retaining a value of the distance travelled by the sound during the said time delay, and a processor to enable that value to be divided by the said time delay to provide a measure of the speed of sound.

12. A method of providing a measure of the time taken for sound to travel a predetermined distance, comprising emitting an acoustic signal from a transmitter electroacoustic transducer (2,46,108) and receiving a signal by a receiver electroacoustic transducer (3,48,108) which is spaced apart from the transmitter electroacoustic transducer (2,46,108), reflecting the signal from a sound reflective surface (1,91) spaced apart from the receiver electroacoustic transducer (3,48,108) and receiving the reflection by the receiver electroacoustic transducer (3,48,108), and measuring the time delay between the reception by the receiver electroacoustic transducer (3,48,108) of the signal and its reflection by means of timing electrical circuitry connected to the receiver electroacoustic transducer (3, 48, 108).

13. A method according to claim 12, using apparatus according to any one of claims 2 to 5.

14. A method according to claim 12, using apparatus according to claim 2, **characterised in that** the transducers (46,48) are located respectively at opposite ends of a duct (36) through which flows fluid the flow of which is to be measured, and one of the transducers (46) is caused to emit an acoustic signal, whereupon the time it takes for that signal to reach the other transducer (48) is measured, and the said other transducer (48) is caused to emit an acoustic signal and the time it takes for that signal to reach the said one transducer (46) is measured, and whereupon the rate of flow of fluid through the duct (36) is calculated from the difference between these two measurements.

**15.** A method of measuring the speed of wind using an anemometer as claimed in any of claims 8 to 10.

**16.** A method according to claim 12 or claim 13, **characterised in that** the distance travelled by the sound during the said time delay is divided by that time delay to obtain a measure of the speed of sound.

FIG.1 (PRIOR ART)

FIG. 2

Fig. 3

Fig. 4

Fig. 5

Fig. 6

Fig. 7

Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0566708 B1